# EUROPEAN PATENT SPECIFICATION

(11) **EP 1 975 028 B1**
(45) Date of publication and mention of the grant of the patent: **03.11.2010**
(21) Application number: 08153068.5
(22) Date of filing: 20.03.2008
(51) Int. Cl.: B60W 20/00, B60W 10/06, B60W 10/08, B60W 10/26, B60W 30/18

(54) **Driving support method and driving support apparatus for hybrid vehicle**
Fahrunterstützungsverfahren und Fahrunterstützungsvorrichtung für ein Hybridfahrzeug
Procédé d'assistance à la conduite et appareil d'assistance à la conduite pour véhicule hybride

(30) Priority: 27.03.2007 JP 2007082690
(43) Date of publication of application: 01.10.2008
(73) Proprietor: Aisin AW Co., Ltd., Fujii-cho Anjo-shi, Aichi 444-1192 (JP)
(72) Inventor: Otabe, Akira, Okazaki-shi Aichi 444-8564 (JP)
(74) Representative: TBK-Patent

(56) References cited:
- DE-A1- 10 149 285
- DE-A1-102005 024 403

## Description

The present invention relates to a driving support method and a driving support apparatus for a hybrid vehicle.

A hybrid vehicle employing an internal combustion engine and an electric motor as driving power sources is well known in the art in comparison with a normal vehicle employing only an internal combustion engine as a power source. As an example of such a hybrid vehicle, a vehicle which stores electric power supplied by an external infrastructure in a battery is suggested. As a power charging method for such a hybrid vehicle, when the amount of charge remaining in the battery is reduced, electric power is charged by means of a charging station for an electric vehicle or an exclusive battery charger plugged into a house outlet.

According to this type of hybrid vehicle, when the amount of charge remaining in the battery goes below a low threshold value while the vehicle is traveling, the hybrid vehicle stops using the electric motor as a power source and travels only using the internal combustion engine, so that the fuel efficiency might become low. This is not recommended in terms of energy saving and low-emission technology.

To solve the problems described above, according to a hybrid vehicle disclosed in Japanese Unexamined Patent Application Publication No. H8-237810, when a user inputs a travel schedule in advance, the hybrid vehicle assigns the amount of charge remaining in the battery to travel on each of a plurality of routes. Specifically, the user inputs a travel schedule such as a departure point at which the user charges the battery, a point at which the user will pass through, and a next charge point in advance. A navigation ECU searches for routes on the basis of the travel schedule and calculates the travel distance of each route. Further, the navigation ECU assigns the amount of charge remaining in the battery to each route on the basis of the travel distances and outputs the necessary amount of charge (hereinafter referred to as SOC usage) for each route to a vehicle ECU. For example, when the user plans to travel on both a route A and a route B before the vehicle arrives at a next charge point, the SOC usage for the route A is set at 40% and the SOC usage for the route B is set at 60% on the basis of the distances of the two routes.

According to the apparatus described above, when an entire travel schedule for the vehicle is input in advance, the user may take advantage of the efficient assignment of the amount of charge remaining in the battery on the basis of the input schedule. However, when no destination is set, the apparatus described above cannot assign the amount of charge remaining in the battery. Further, in the case that the driver of the vehicle often travels along the same route, it is bothersome for the driver to input the travel schedule every time.

Document DE 10 2005 024 403 A1 discloses a driving support method for a hybrid vehicle, wherein a destination is predicted on the basis of past travel history data, in case a destination is not set; and wherein a probability of the predicted destination is also determined. The hybrid vehicle is controlled based on this determined probability.

Document DE 101 49 285 A1 discloses an advanced driver assistance system wherein a route is estimated, and a reliability of this estimation is checked.

It is an object of the present invention to provide a driving support method and a driving support apparatus for hybrid vehicle for supporting efficient travel even without setting a destination.

This object is solved by a driving support method for a hybrid vehicle as set out in claim 1, and alternatively by a driving support apparatus for a hybrid vehicle as set out in claim 2.

Advantageous developments are set out in the dependent claims.

Various exemplary implementations of the principles described herein provide the driving support apparatus for a hybrid vehicle, further including: a travel distance predicting device for calculating a predicted travel distance to the predicted destination, wherein: the controlling device determines whether the hybrid vehicle is able to travel to the predicted destination using only the electric motor on the basis of the predicted travel distance and activates, provided that it is possible for the hybrid vehicle to travel to the predicted destination with using only the electric motor, only the electric motor using the hybrid control device, or otherwise activates, provided that the hybrid vehicle is not able to travel to the predicted destination using only the electric motor, both the electric motor and the internal combustion engine by the hybrid control device in a way that the amount of charge remaining in the electric charger becomes a predetermined low limit when the hybrid vehicle arrives at the predicted destination.

According to the present invention, when a destination is not set, the destination is predicted and the degree of reliability of the predicted destination is calculated. Further a hybrid control device is controlled on the basis of the calculated degree of reliability. Therefore, even when a travel schedule is not set in advance, it may be possible for the driver to travel in efficient hybrid mode.

According to the present invention, when a destination is not set, the driving support apparatus for hybrid vehicle predicts the destination and calculates the degree of reliability of the predicted destination. Further the driving support apparatus for hybrid vehicle controls the hybrid control device on the basis of the calculated degree of reliability, so that even when a travel schedule is not set in advance, it may be possible for the driver to travel in efficient hybrid mode.

According to the present invention, it is determined whether the degree of reliability of the predicted destination is equal to or greater than a predetermined value. When the degree of reliability is equal to or greater than the predetermined value, the hybrid control device is controlled on the basis of the route to the predicted destination, so that, when the degree of reliability of the destination is high, it may be possible for the driver to travel on the route in efficient hybrid mode.

According to the present invention, when it is determined that the vehicle is able to travel to the predicted destination only with using the electric motor, the vehicle travels only with using the electric motor as a driving power source. Meanwhile, when it is determined that the vehicle is not able to travel to the predicted destination only with using the electric motor, the vehicle travels with using both of the electric motor and the internal combustion engine in a way that the amount of charge remaining in a charger becomes a predetermined low limit. Therefore, it may be possible for the vehicle to travel in efficient hybrid mode according to the amount of charge in the charger.

### BRIEF DESCRIPTION OF THE DRAWINGS

FIG. 1 is a block diagram showing a hybrid system.

FIG. 2 is a diagram showing a data structure of history data.

FIG. 3 is a flowchart showing procedures in a current embodiment.

FIG. 4 is a flowchart showing procedures of destination predicting processing.

FIG. 5 is a flowchart showing procedures of history data accumulating processing.

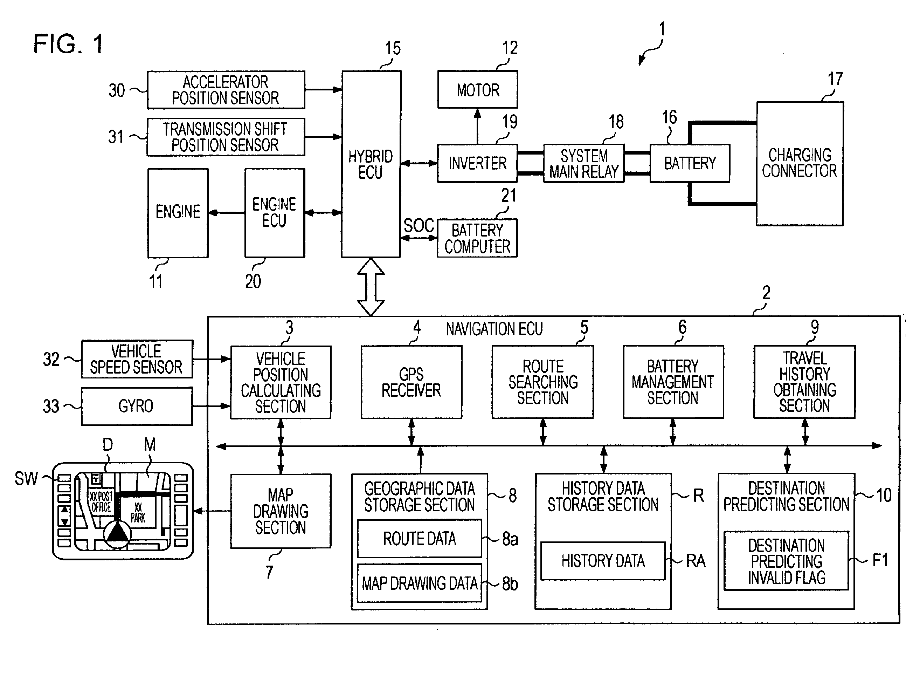

An embodiment of the present invention will be described with reference to FIGs. 1 through 5 in detail below. FIG. 1 is a block diagram showing a hybrid system 1 which is mounted in a hybrid vehicle.

The hybrid system 1 has two types of driving power sources; an engine 11 serving as an internal combustion engine and a motor 12 serving as an electric motor. The hybrid system 1 controls the driving of the vehicle in various kinds of travel modes used in combination depending on travel conditions. As examples of the travel modes, a mode in which the driving power of the engine 11 is mechanically translated to wheels, a mode in which the vehicle travels only using the motor 12 while the engine 11 is stopped, a mode in which the driving powers of the engine 11 and the motor 12 are translated to wheels, a mode in which the vehicle travels by generating electric power with the motor 12 and collecting the electric power, and the like are provided.

The hybrid system 1 may include a battery 16 including an electric cell module as an electric charger and a charging connector 17 for charging the battery 16 by an external charging method. The battery 16 may be charged by an external charging method. The charging connector 17 may be plugged into a house outlet or a charging station through a charging device such as a cable.

A direct-current from the battery 16 is converted to an alternating current by an inverter 19 and supplied to the motor 12. The inverter 19 is connected to each of the battery 16 and the motor 12 with a high-voltage and large-current electric cable. There is a system main relay 18 between the battery 16 and the inverter 19. The system main relay 18 connects or disconnects the high-voltage circuit on the basis of the control of a hybrid ECU 15 as a hybrid control device.

The hybrid ECU 15 calculates, for example, an engine output, a motor torque, and a transmission gear ratio on the basis of an acceleration pedal pressing-down amount which is output from an acceleration position sensor 30, a shift position which is detected from a shift position sensor 31, and other signals which are output from various types of sensors. The hybrid ECU 15 outputs such calculated values to an engine ECU 20 and/or the inverter 19 in the hybrid system 1 at the request thereof and controls the driving force of the hybrid vehicle.

A battery computer 21 which is installed in the hybrid system 1 monitors if the SOC value indicating the SOC (State of Charge) of the battery 16 remains within a target value zone between the maximum control limit and the minimum control limit. The battery computer 21 further calculates the SOC value by measuring the amounts of charged/discharged electric current of the battery 16 on the basis of an electric current value which is obtained from an electric current sensor (not shown) and outputs the calculated SOC value to the hybrid ECU 15.

The hybrid ECU 15 is connected to a navigation unit 2 which is included in the hybrid system 1 as a hybrid driving support apparatus through, for example, CAN communication. The hybrid ECU 15 outputs the SOC value which has been obtained from the battery computer 21 to the navigation unit 2. The navigation unit 2 outputs the battery usage per unit distance and/or a request for using a desired travel mode to the hybrid ECU 15 on the basis of the obtained SOC value. When the hybrid ECU 15 inputs the sent request, the hybrid ECU 15 changes the travel mode according to the request and a travel condition of the hybrid vehicle.

The navigation unit 2 may include a vehicle position calculating section 3 as vehicle position calculating means, a GPS receiver 4, and a route searching section 5 as setting determining means and route obtaining means. The navigation unit 2 may further include a battery management section 6 which collaborates with the hybrid ECU 15 as travel distance predicting means and control means, a map drawing section 7, a geographic data storage section 8, a travel history obtaining section 9, a destination predicting section 10 as destination predicting means, travel distance predicting means, degree of reliability calculating means, and controlling means, and a history data storage section R as history data storage means.

The vehicle position calculating section 3 inputs a position detecting signal indicating coordinates such as the latitude and the longitude which is received by the GPS receiver 4 from a GPS (Global Positioning System) satellite and calculates the absolute position of the hybrid vehicle, using an electric navigation method. The vehicle position calculating section 3 inputs a vehicle speed pulse and an angular speed obtained from a vehicle speed sensor 32 and a gyro 33 which are both attached on the hybrid vehicle. The vehicle position calculating section 3 calculates a relative position from a reference point, using an autonomous navigation method based on the vehicle speed pulse and the angular speed and specifies the vehicle position, using both the relative position and the absolute position which has been calculated by the electric navigation method.

The geographic data storage section 8 may be an internal hard disk or an external storage medium such as an optical disk. In the geographic data storage section 8, route network data for searching for a route to a destination (hereinafter referred to as route data 8a) and map drawing data 8b for outputting a map screen M on a touch panel display (hereinafter referred to as display D) as a display device are stored.

The route data 8a is data indicating roads within a "mesh" which divides the land into small areas and may include a mesh ID as a indicator of the mesh, link data for links within the mesh, and node data for nodes. As used herein the term "node" refers to a point connecting two links. A node may be, for example, an intersection, an interchange exit, and/or an end point of a road.

The link data includes, for example, road types and link costs. The link cost may be a cost of each link depending on a link attribute such as a link length and/or congestion.

The map drawing data 8b may be stored for each mesh into which a map of the entire country is divided and the map drawing data 8b may be divided into map data of different levels of detail, from data representing wide-area maps to data representing local-area maps. The map drawing data 8b may include a mesh ID, background data, road data, and the like. The background data may be drawing data that depict roads, urban areas, rivers, and the like. The road data may include data that indicates the shape of the road such as coordinates of nodes, coordinates of a shape interpolation point, a road width, a slope, a road surface condition, and the like.

The map drawing section 7 reads out map drawing data 8b corresponding to the current position of the hybrid vehicle and outputs the data on the display D. The display D is a touch panel for detecting a position which is touched by a user's finger. When the user touches a predetermined operating section on the touch panel for specifying a destination, a control computer of the touch panel (not shown) outputs the touched position to the navigation unit 2.

The route searching section 5 of the navigation unit 2 obtains the destination which is specified on the basis of the operation on the touch panel by the user and temporarily stores the destination in an internal memory in the route searching section 5. The destination may be specified by operating a switch SW which is mounted next to the display D or by using a voice recognition method with an audio recognizing section (not shown). The route searching section 5, for example, obtains coordinates of the current position and coordinates of the input destination by the user's operation and searches for a route to the destination by using the link cost and in consideration of a plurality of conditions.

The travel history obtaining section 9 obtains travel history of the hybrid vehicle and stores the data as history data RA in the history data storage section R. The history data RA is data for predicting a destination on the basis of a current position and a current date and time when the destination is not set.

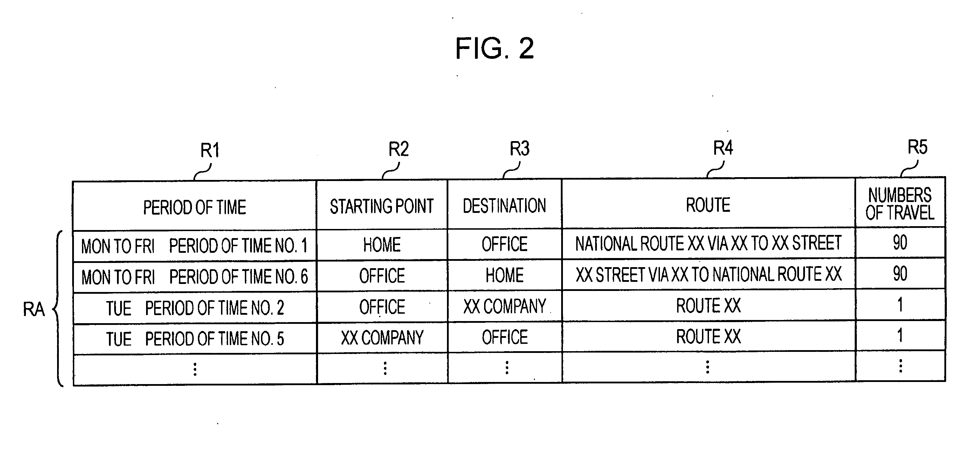

As shown in FIG. 2, the history data RA may include a date and time R1, a starting point R2, a destination R3, a route R4, and a number of times traveled R5. The date and time R1 indicates a date and time when the hybrid vehicle starts traveling and at least one element such as a day of the week (weekday, Saturday, Sunday, or holiday) and/or time period is stored as day and time R1. The starting point R2 indicates a name or coordinates of a point where an ignition switch is turned on or a vehicle position at which a destination has been set. The destination R3 indicates a point where the ignition switch is turned off or a name or coordinates of a point which is set by the user's input operation. In the figures, a name of a road is shown as the route R4. However, in fact, road data such as a link ID and/or a node ID is stored as the route R4. The number of times traveled R5 indicates how many times the vehicle has traveled on the route R4 from the starting point R2 to the destination R3. For example, the number of times traveled by the vehicle has traveled on a route from "home" to "office" is provided.

When the destination is set and when the user selects one route among recommended routes which are searched for by the route searching section 5, the travel history obtaining section 9 obtains the link IDs of the selected route and searches for history data RA including the route R4 which is the same as the selected route within the history data storage section R. When the history data RA including the route R4 which is same as the selected route is not stored in the history data storage section R, the travel history obtaining section 9 obtains the date and time R1, the starting point R2, the destination R3, and the like, and generates new history data RA in which the obtained data described above are related to the route R4. In this case, the number of times traveled R5 of the new history data RA is "1" and the generated history data RA is stored in the history data storage section R. When the history data RA including the route R4 which is same as the currently selected route is detected, the number of times traveled R5 of the detected history data RA is incremented and the history data RA is updated.

Meanwhile, when the destination is not set, the travel history obtaining section 9 determines that the vehicle position at which the ignition switch of the hybrid vehicle is turned on is a starting point. When the hybrid vehicle starts traveling, the travel history obtaining section 9 obtains the current position from the vehicle position calculating section 3 successively and further obtains, for example, the link ID of the link on which the current position is located, and stores the link IDs as travel locus. When the ignition switch is turned off, the position of the hybrid vehicle at that time is determined as an ending point, so that the accumulated link IDs indicating the travel locus are stored as the route R4 on which the hybrid vehicle traveled this time. As described above, it is determined whether the history data RA same as the route R4 exists or not. When it is determined that the history data RA same as the route R4 does not exist, new history data RA is generated and stored. When such history data RA exists, the number of times traveled R5 of the detected history data RA is incremented.

When the destination is not set, the destination predicting section 10 predicts the destination on the basis of the current position of the hybrid vehicle and history data RA. Specifically, the destination predicting section 10 successively obtains the current position from the vehicle position calculating section 3 and determines on which link the current vehicle position is located. When the hybrid vehicle starts traveling, the destination predicting section 10 obtains data indicating links on which the hybrid vehicle has traveled (for example, the link IDs) from the travel history obtaining section 9. When the vehicle has traveled a predetermined distance from the starting point, or when a predetermined time has passed since the vehicle started traveling from the starting point, or when the vehicle obtains equal to or more than a predetermined number of the link IDs, that is, when the destination is able to be predicted, the history data storage section R is searched for and it is determined whether history data RA which is similar to the current travel condition exists. The obtained link IDs are included as the route R4, and the history data RA including the date and time R1 which indicates the same day of the week and the same time period as the current day of the week and the current time period is searched for. When history data RA which is similar to the current condition is not detected, it is determined that the destination cannot be predicted and a destination predicting invalid flag F1 which is stored in the destination predicting section 10 is set (FIG. 1). The destination predicting invalid flag F1 is a flag which is stored in an internal memory (not shown) of the destination predicting section 10. For example, "1" means that the destination cannot be predicted on the basis of the history data RA.

When the history data RA which is similar to the current condition is detected, the destination predicting section 10 determines that the destination is able to be predicted and reads out the number of times traveled R5 of all of the detected history data RA. When the maximum number of times traveled R5 is equal to or greater than a predetermined number of times (for example, three times) among the detected history data RA, that is, when the hybrid vehicle has been to the destination more than the predetermined number of times, the numbers of travel R5 of all of the detected history data RA are added and the maximum number of times traveled R5 is divided by the added total number to calculate the degree of reliability of the destination. When the destination is not set, the degree of reliability of the destination may provide an indication of the possibility to match the candidate destination specified by the history data RA which is similar to the current travel condition with the real destination.

The destination predicting section 10 determines whether the degree of reliability is equal to or greater than a predetermined rate (predetermined value), for example, 70%. When the degree of reliability is equal to or greater than the predetermined rate, the destination R3 included in the history data RA is set as the predicted destination of the hybrid vehicle.

The battery management section 6 controls the hybrid ECU 15 in a way that the SOC value of the battery 16 becomes the low limit when the hybrid vehicle arrives at the predicted destination on the basis of the predicted travel distance to the predicted destination. Specifically, the battery management section 6 obtains the SOC value of the battery 16 which is in the hybrid system 1 through the hybrid ECU 15. It is further determined whether the destination is set and when the destination is set, the travel distance between the current position and the destination is calculated. It is further determined whether the travel distance which the hybrid vehicle is able to travel by using the amount of charge remaining in the battery 16 is equal to or greater than the predicted travel distance. When the possible travel distance is equal to or greater than the predicted travel distance, the request for traveling only by using the motor 12 is output to the hybrid ECU 15. For example, the battery usage per unit distance may be output or a suitable travel mode may be specified.

When the travel distance which the vehicle is able to travel using the amount of charge remaining in the battery 16 is less than the predicted travel distance, the battery usage per unit distance and a suitable travel mode are calculated in a way that the SOC value of the battery 16 becomes a low limit before detecting complete discharge when the hybrid vehicle arrives at the destination. In this case, for example, when it is determined that a steep road is being approached on the basis of slope data which are stored in the map drawing data 8b in advance, it may be possible to set a relatively large amount of the battery usage for the section including the steep road.

When the destination is not set, it is determined whether the destination is able to be predicted on the basis of the destination predicting section 10. When the destination predicting invalid flag F1 is on and when the destination is not able to be predicted, it is determined that the hybrid vehicle travels in a normal hybrid mode.

When the destination predicting invalid flag F1 is off and when the destination is able to be predicted, the battery management section 6 obtains coordinates of the predicted destination from the destination predicting section 10 and calculates the predicted travel distance between the current position of the hybrid vehicle and the predicted destination. Further, the possible distance which the hybrid vehicle is able to travel only using the motor 12 with the amount of charge remaining in the battery 16 is compared with the predicted travel distance. When the possible distance to be traveled with the amount of charge remaining in the battery is equal to or greater than the predicted travel distance, the battery usage per unit distance and a suitable travel mode are calculated in a way that the SOC value of the battery 16 becomes a low limit before detecting complete discharge when the hybrid vehicle arrives at the predicted destination as described above, so that it is possible to use the battery 16 in the most efficient manner.

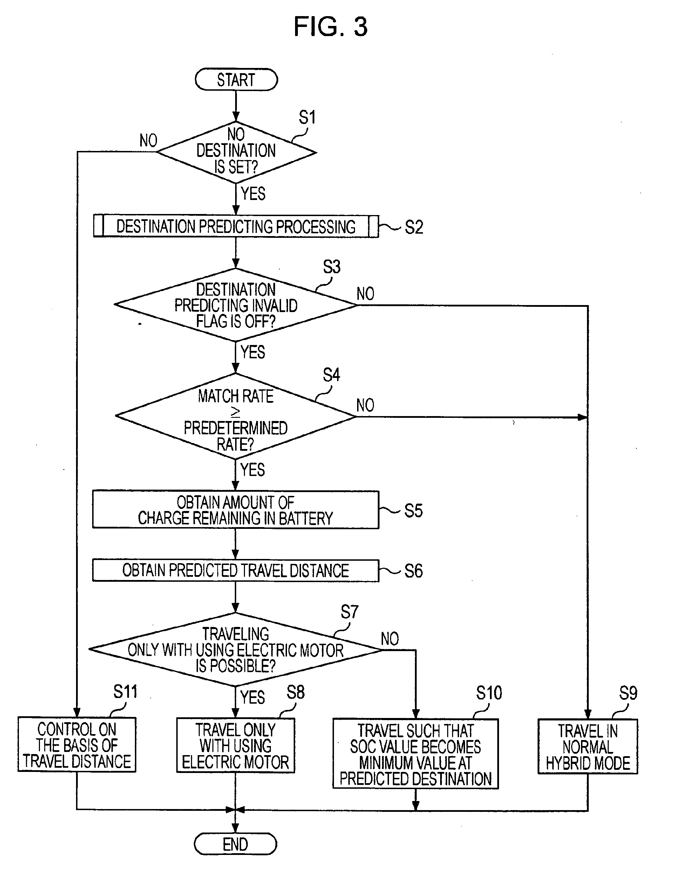

Next, the procedures of the navigation unit 2 will be described with reference to FIGs. 3 through 5. As shown in FIG. 3, the route searching section 5 determines whether the destination is not set (Step S1). When the destination is stored in the internal memory (not shown) of the route searching section 5 (Step S1=NO), the battery management section 6 controls the hybrid vehicle in a way that the SOC value of the battery 16 becomes the low limit described above at that time when the hybrid vehicle arrives at the destination on the basis of the travel distance to the destination (Step S11). The battery management section 6 obtains the SOC value through the hybrid ECU 15 and calculates the amount of charge remaining in the battery. The battery management section 6 further obtains the travel distance between the starting point and the destination from the route searching section 5 and compares the possible distance which the hybrid vehicle is able to travel with using the amount of charge remaining in the battery with the travel distance to the destination. When the possible distance to be traveled with using the amount of charge remaining in the battery is equal to or greater than the travel distance to the destination, the hybrid vehicle travels only with using the motor 12. When the possible distance to be traveled only with using the amount of charge remaining in the battery is less than the travel distance to the destination, the hybrid vehicle travels with using the engine 11. In this case, the motor 12 may be caused to function as an electric generator during the time of reducing the speed or the like so as to charge the battery 16, and it may be checked if the possible distance which the hybrid vehicle is able to travel with using the amount of charge remaining in the battery becomes greater than the travel distance to the destination.

In Step S1, when it is determined that the destination is not set (Step S1=YES), the destination predicting processing is executed (Step S2).

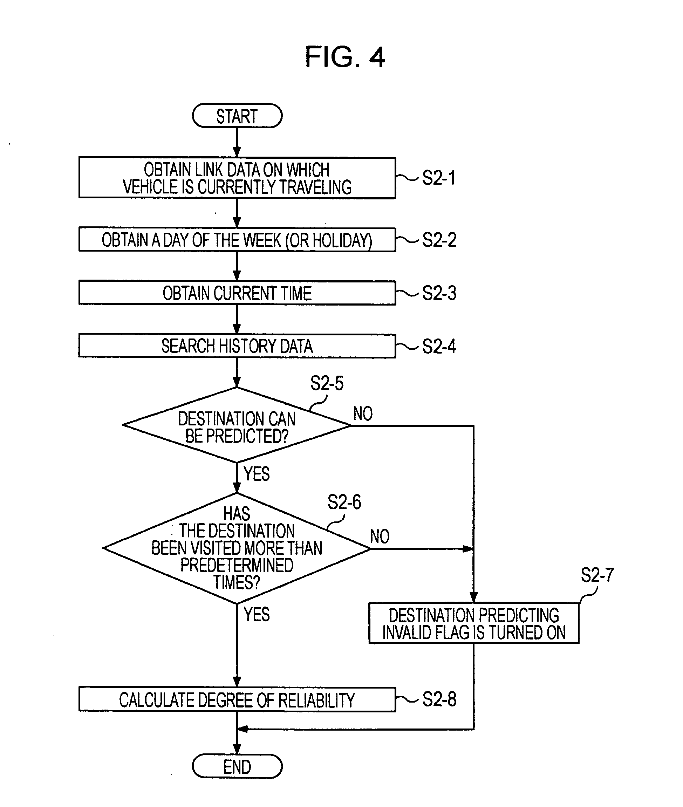

The destination setting processing will be described with reference to FIG. 4. The destination predicting section 10 obtains the vehicle position from the vehicle position calculating section 3, obtains the link ID corresponding to the obtained vehicle position on the basis of the route data 8a (Step S2-1), and accumulates the link IDs on which the vehicle has passed through from the starting point. The destination predicting section 10 further obtains the current day of the week on the basis of an internal clock (not shown) (Step S2-2) and obtains the current time (Step S2-3).

The destination predicting section 10 includes the obtained link IDs as the route R4 in the history data RA which is stored in the history data storage section R and searches for the history data RA including the day and time R1 which is same as the current day of the week and the current time (Step S2-4).

After the search, the destination predicting section 10 determines whether the destination is able to be predicted on the basis of the result of the search (Step S2-5). When the history data RA including the day and time R1 which is same as the current day of the week and the current time is detected, it is determined that the destination is able to be predicted on the basis of the destination R3 included in the detected history data RA (Step S2-5=YES), so that the procedures goes to Step S2-6. When a plurality of history data RA are detected, the numbers of travel R5 of the plurality of the history data RA are referred and one history data RA whose number of times traveled R5 is the maximum number among the plurality of the history data RA is selected. Further, the destination R3 in the selected history data RA is set as a predicted destination candidate. When any one of history data RA is not detected, it is determined that the destination is not able to be predicted (Step S2-5=NO), and the procedure goes to Step S2-7.

When the destination is able to be predicted, it is determined whether the hybrid vehicle has been to the destination equal to or more than predetermined number of times in Step S2-6. The destination predicting section 10 determines whether the number of times traveled R5 included in the detected history data RA is equal to or greater than predetermined number of times (for example, three times). When the target predicted destination R3 is a place which the vehicle frequently visits such as a "home" and when the number of times traveled R5 is equal to or greater than predetermined number of times (Step S2-6=YES), the degree of reliability is calculated (Step S2-8). As described above, the destination predicting section 10 adds the numbers of travel of all of the detected history data RA, the maximum number of times traveled R5 is divided by the added total number, and the degree of reliability is calculated.

Meanwhile, it is determined that the destination is not able to be predicted in Step S2-5 (Step S2-5=NO), and the destination predicting invalid flag F1 is turned on (Step S2-7). In Step S2-6, when it is determined that the vehicle has been to the destination less than the predetermined number of times (Step S2-6=NO), the destination predicting invalid flag F1 is turned on as well (Step S2-7).

After the destination predicting processing is terminated, the procedure goes to Step S3 in FIG. 3 and it is determined whether the destination predicting invalid flag F1 is off (Step S3). When the destination predicting invalid flag F1 is on (Step S3=NO), the destination is not able to be predicted, so that the vehicle travels in the normal hybrid mode (Step S9). In this case, the hybrid ECU 15 changes the travel modes according to the vehicle condition such as the user's acceleration operation, and the SOC value of the battery 16 and operates the hybrid system 1.

When it is determined that the destination predicting invalid flag F1 is off (Step S3=YES), it is further determined whether the degree of reliability which is calculated in the destination predicting processing is equal to or greater than a predetermined rate because the destination is able to be predicted (Step S4). When it is determined that the degree of reliability is less than the predetermined rate (70%) (Step S4=NO), the destination is not able to be predicted, so that the vehicle travels in the normal hybrid mode (Step S9). When it is determined that the degree of reliability is equal to or greater than the predetermined rate (Step S4=YES), the SOC value is input from the battery computer 21 through the hybrid ECU 15 and the amount of charge remaining in the battery is obtained (Step S5). The route searching section 5 obtains the route to the predicted destination which is specified in the destination predicting processing from the history data RA and further obtains the predicted travel distance to the predicted destination (Step S6).

The battery management section 6 determines whether the vehicle can travel to the predicted destination only with using the motor 12 on the basis of the calculated amount of charge remaining in the battery and the predicted travel distance (Step S7). For example, the battery management section 6 may obtain the distance which the vehicle can travel with the amount of charge remaining in the battery by referring to a relation map in which both of the amount of charge remaining in the battery and the distance which the vehicle can travel with the amount of charge remaining in the battery are related to each other. When the distance which the vehicle can travel with using the amount of charge remaining in the battery is equal to or greater than the predicted travel distance, it is determined that the vehicle can travel only with using the motor 12 (Step S7=YES), so that the engine 11 is stopped and the vehicle travels only with using the motor 12 (Step S8). The battery management section 6 outputs the battery usage per unit distance and/or a request to specify the travel mode only with using the motor 12 to the hybrid ECU 15.

When it is determined that the vehicle is not able to travel only with using the motor 12 in Step S7 (Step S7=NO), the vehicle travels in a way that the amount of charge remaining in the battery 16 is out at the predicted distance and the SOC value becomes a predetermined low limit (Step S10). The battery management section 6 outputs the battery usage per unit distance for the predicted travel distance to the hybrid ECU 15. Meanwhile, it is possible to specify which section should be traveled with using only the motor 12 and which section should be traveled with using the engine 11 along the predicted travel distance on the basis of road type data and slope data which are stored in the map drawing data 8b of the geographic data storage section 8.
In this case, the amount of charge remaining in the battery which is charged by the motor 12 as an electric generator is not considered.

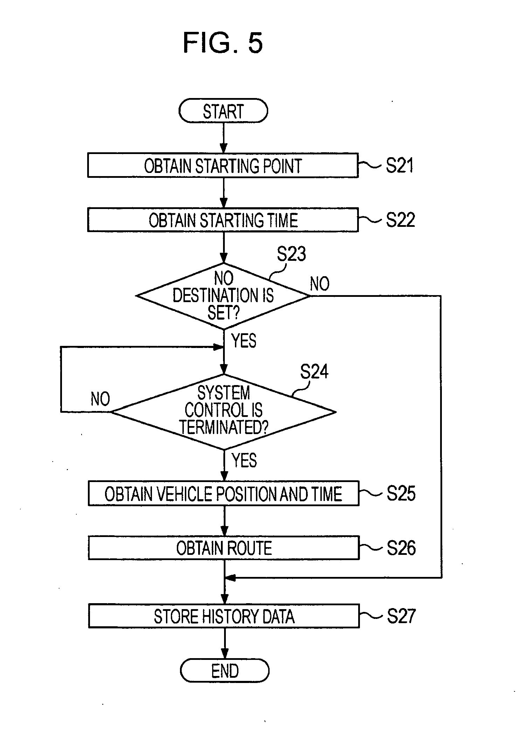

Next, the history data accumulating processing for accumulating travel history in the history data storage section R will be described with reference to FIG. 5. First, the travel history obtaining section 9 obtains the starting point (Step S21). For example, the point at which the ignition switch is turned on and at which the hybrid system 1 is operated is obtained from the vehicle position calculating section 3 as the starting point. Meanwhile, the vehicle position at which the user operates a predetermined input operation to set the destination on the display D is obtained and the position may be set as the starting point. The starting time is obtained from the vehicle position calculating section 3 or the route searching section 5 (Step S22).

The travel history obtaining section 9 determines whether the destination is not set (Step S23). When it is determined that the destination is set (Step S23=NO), the history data RA with the starting point and the starting time is stored (Step S27).

When it is determined that the destination has not been set (Step S23=YES), it is further determined whether the vehicle has arrived at the destination and that the control of the hybrid system 1 has been terminated (Step S24). For example, when it is determined that the ignition switch is not off, the procedure waits until the ignition switch is turned off.

When it is determined that the system control is terminated (Step S24=YES), the vehicle position at that time is set as the destination and the current vehicle position is obtained from the vehicle position calculating section 3 (Step S25). The point at which the ignition switch is turned on, that is, the departure point is set as the starting point, and the travel locus between the starting point and the point at which the ignition switch is turned off, that is, the destination, is obtained as the route (Step S26) and the new history data RA is generated. The generated history data RA is stored in the history data storage section R (Step S27). As described above, the history data RA of the traveled routes is accumulated.

According to the embodiment described above, following advantages may be provided.

1) According to the current embodiment, when the destination has not been set, the destination is predicted and the degree of reliability of the predicted destination is calculated. It is determined whether the degree of reliability of the predicted destination is equal to or greater than the predetermined rate and when the degree of reliability is equal to or greater than the predetermined rate, the efficient travel mode is selected on the basis of the amount of charge remaining in the battery 16. Therefore, even if the travel schedule has not been set in advance, it is possible to travel in the most efficient travel mode. Further, the travel mode is selected on the basis of the predicted route only when the degree of reliability of the predicted destination is high, so that it is possible to prevent the system from selecting a wrong travel mode.

2) According to the current embodiment, when it is determined that the vehicle is able to travel to the predicted destination only with using the motor 12, the vehicle travels, using the motor 12 as a driving force.
When it is determined that the hybrid vehicle is not able to travel to the predicted destination only with using the motor 12, the hybrid vehicle travels with using both of the motor 12 and the engine 11 in a way that the amount of charge remaining in the battery 16 becomes a predetermined low limit. Therefore, it may be possible for the hybrid vehicle to travel in efficient hybrid mode according to the amount of charge remaining in the battery 16.

Note that, the embodiment described above may be modified as follows.

* According to the embodiment described above, a day of the week and/or a time is stored as the date and time R1 in the history data RA. However, it may be possible to store a date in year-month-day format, a time when the vehicle starts traveling, and/or an arrival time when the vehicle arrives at the destination instead.

* According to the embodiment described above, when the destination is predicted, the history data RA whose links indicating travel locus and the day of the week and the time period are all similar to those of the destination is detected. However, it may be possible to detect the history data RA whose any one of the links, the day of the week, or the time period is similar to one of the destination.

* According to the embodiment described above, when the destination is not set, the destination predicting section 10 predicts the destination on the basis of the history data RA. However, it may be possible to predict not a destination but a road successively on which the hybrid vehicle may travel on the basis of the route data 8a or the map drawing data 8b.

## Claims

1. A driving support method for a hybrid vehicle whose driving power sources are an internal combustion engine **(11)** and an electric motor **(12)** operating with electric power supplied from an electric charger and which comprises a hybrid control device **(15)** for controlling the internal combustion engine and the electric motor; comprising:
predicting a destination on the basis of past travel history of the hybrid vehicle, provided that the destination is not set, wherein, when the vehicle has traveled a predetermined distance from a starting point, or when a predetermined time has passed since the vehicle started traveling from the starting point, or when the vehicle obtains equal to or more than a predetermined number of the link identifications, a history data storage means **(R)** storing travel history data **(RA)** of the hybrid vehicle is searched to determine whether travel history data **(RA)** which is similar to the current travel condition exists;
calculating, when a number of times **(R5)** traveled of a destination having a maximum number of times traveled among the predicted destinations is equal to or greater than a predetermined number of times, a degree of reliability of the predicted destination having the maximum number of times traveled on the basis of the detected travel history data **(RA),** wherein the numbers of travel **(R5)** of all detected travel history data **(RA)** are added and the maximum number of times traveled is divided by the added total number; and
controlling the hybrid control device on the basis of the destination having the maximum number of times traveled when the calculated degree of reliability is equal to or greater than a predetermined value.

2. A driving support apparatus for a hybrid vehicle whose driving power sources are an internal combustion engine **(11)** and an electric motor **(12)** operating with electric power supplied from an electric charger and which comprises a hybrid control device **(15)** for controlling the internal combustion engine and the electric motor; comprising:
vehicle position calculating means **(3)** for calculating a position of the hybrid vehicle;
setting determining means **(5)** for determining whether a destination is set;
history data storage means **(R)** for storing travel history data **(RA)** of the hybrid vehicle;
destination predicting means **(10)** for predicting a destination on the basis of the travel history data, provided that the destination is not set, wherein the destination predicting means **(10)** is adapted to search the history data storage means **(R)** to determine whether travel history data **(RA)** which is similar to the current travel condition exists, when the vehicle has traveled a predetermined distance from a starting point, or when a predetermined time has passed since the vehicle started traveling from the starting point, or when the vehicle obtains equal to or more than a predetermined number of the link identifications,;
degree of reliability calculating means for calculating, when a number of times **(R5)** traveled of a destination having a maximum number of times traveled among the predicted destinations is equal to or greater than a predetermined number of times, a degree of reliability of the predicted destination having the maximum number of times traveled on the basis of the travel history data; and
controlling means for controlling the hybrid control device on the basis of the destination having the maximum number of times traveled when the calculated degree of reliability is equal to or greater than a predetermined value.

3. The driving support apparatus for a hybrid vehicle according to Claim 2, further comprising:
route obtaining means for obtaining a route to the destination on the basis of the travel history data, wherein:
the controlling means is adapted to control the hybrid control device on the basis of the route to the destination having the maximum number of times traveled.

4. The driving support apparatus for a hybrid vehicle according to Claim 3, further comprising:
travel distance predicting means **(6)** for calculating a predicted travel distance to the predicted destination, wherein:
the controlling means is adapted to determine whether the hybrid vehicle is able to travel to the predicted destination using only the electric motor **(12)** on the basis of the predicted travel distance and to activate, provided that it is possible for the hybrid vehicle to travel to the predicted destination using only the electric motor, only the electric motor using the hybrid control device **(15),** or otherwise to activate, provided that the hybrid vehicle is not able to travel to the predicted destination using only the electric motor, both the electric motor **(12)** and the internal combustion engine **(11)** using the hybrid control device **(15)** in a way that the amount of charge remaining in the electric charger becomes a predetermined low limit when the hybrid vehicle arrives at the predicted destination.

## Patentansprüche

1. Fahrunterstützungsverfahren für ein Hybridfahrzeug, dessen Antriebsenergiequellen eine Brennkraftmaschine **(11)** und ein mit einer von einem elektrischen Ladegerät zugeführten elektrischen Energie arbeitender Elektromotor **(12)** sind, und welches ein Hybridsteuergerät **(15)** zum Steuern der Brennkraftmaschine und des Elektromotors aufweist, mit:
Vorhersagen eines Zieles auf der Grundlage bisheriger Reiseverläufe des Hybridfahrzeuges, sofern das Ziel nicht eingestellt ist, wobei eine Verlaufsdatenspeichereinrichtung **(R),** die Reiseverlaufsdaten **(RA)** des Hybridfahrzeuges speichert, durchsucht wird, um zu bestimmen, ob Reiseverlaufsdaten **(RA)** existieren, welche den aktuellen Reisebedingungen ähnlich sich, wenn das Fahrzeug eine vorbestimmte Entfernung von einem Startpunkt zurückgelegt hat, oder wenn seit dem Reisebeginn des Fahrzeuges von dem Startpunkt aus eine vorbestimmte Zeitdauer verstrichen ist, oder wenn das Fahrzeug eine vorbestimmte Anzahl oder mehr von Verbindungsidentifikatoren erlangt;
Berechnen, wenn eine Reise-Häufigkeit **(R5)** eines Zieles, das unter den vorhergesagten Zielen eine maximale Reise-Häufigkeit aufweist, größer oder gleich einer vorbestimmten Häufigkeit ist, eines Zuverlässigkeitsgrades des vorhergesagten Zieles, das die maximale Reise-Häufigkeit aufweist, auf der Grundlage der erfassten Reiseverlaufsdaten **(RA),** wobei die Anzahl von Reisen **(R5)** aller erfassten Reiseverlaufsdaten **(RA)** addiert werden und die maximale Reise-Häufigkeit durch die addierte Gesamtanzahl dividiert wird; und
Steuern des Hybridsteuergeräts auf der Grundlage des Zieles, das die maximale Reise-Häufigkeit aufweist, wenn der berechnete Zuverlässigkeitsgrad größer oder gleich einem vorbestimmten Wert ist.

2. Fahrunterstützungsvorrichtung für ein Hybridfahrzeug dessen Antriebsenergiequellen eine Brennkraftmaschine **(11)** und ein mit einer von einem elektrischen Ladegerät zugeführten elektrischen Energie arbeitender Elektromotor **(12)** sind, und welches ein Hybridsteuergerät **(15)** zur Steuerung der Brennkraftmaschine und des Elektromotors aufweist, mit:
einer Fahrzeugpositions-Berechnungseinrichtung **(3)** zur Berechnung einer Position des Hybridfahrzeuges;
einer Einstellungsbestimmungseinrichtung **(5)** zur Bestimmung, ob ein Ziel eingestellt ist;
einer Verlaufsdatenspeichereinrichtung **(R)** zur Speicherung von Reiseverlaufsdaten **(RA)** des Hybridfahrzeuges;
einer Ziel-Vorhersageeinrichtung **(10)** zur Vorhersage eines Zieles auf der Grundlage der Reiseverlaufsdaten, sofern das Ziel nicht eingestellt ist, wobei die Ziel-Vorhersageeinrichtung **(10)** dazu angepasst ist, um die Verlaufsdatenspeichereinrichtung **(R)** zu durchsuchen, um zu bestimmen, ob Reiseverlaufsdaten **(RA)** existieren, welche den aktuellen Reisebedingungen ähnlich sind, wenn das Fahrzeug eine vorbestimmte Entfernung von einem Startpunkt zurückgelegt hat, oder wenn seit dem Reisebeginn des Fahrzeuges von dem Startpunkt eine vorbestimmte Zeitdauer verstrichen ist, oder wenn das Fahrzeug eine vorbestimmte Anzahl oder mehr von Verbindungsidentifikatoren erlangt;
einer Zuverlässigkeitsgrad-Berechnungseinrichtung zur Berechnung, wenn eine Reise-Häufigkeit (R5) eines Zieles, das unter den vorhergesagten Zielen eine maximale Reise-Häufigkeit aufweist, größer oder gleich einer vorbestimmten Häufigkeit ist, eines Zuverlässigkeitsgrades des vorhergesagten Zieles, das die maximale Reise-Häufigkeit aufweist, auf der Grundlage der Reiseverlaufsdaten; und
einer Steuerungseinrichtung zur Steuerung des Hybridsteuergeräts auf der Grundlage des Zieles, das die maximale Reise-Häufigkeit aufweist, wenn der berechnete Zuverlässigkeitsgrad größer oder gleich einem vorbestimmten Wert ist.

3. Fahrunterstützungsvorrichtung für ein Hybridfahrzeug gemäß Anspruch 2, weiterhin mit:
einer Fahrtrouten-Erlangungs-Einrichtung zur Erlangung einer Fahrtroute zu dem Ziel auf der Grundlage der Reiseverlaufsdaten, wobei:
die Steuerungseinrichtung dazu angepasst ist, um das Hybridsteuergerät auf der Grundlage der Fahrtroute zu dem Ziel zu steuern, das die maximale Reise-Häufigkeit aufweist.

4. Fahrunterstützungsvorrichtung für ein Hybridfahrzeug gemäß Anspruch 3, weiterhin mit:
einer Reise-Entfernungs-Vorhersageeinrichtung **(6)** zur Berechnung einer vorhergesagten Reise-Entfernung zu dem vorhergesagten Ziel, wobei:
die Steuerungseinrichtung dazu angepasst ist, um auf der Grundlage der vorhergesagten Reise-Entfernung zu bestimmen, ob das Hybridfahrzeug dazu in der Lage ist, unter Verwendung von lediglich dem Elektromotor **(12)** zu dem vorhergesagten Ziel zu reisen, und um, sofern es dem Hybridfahrzeug möglich ist, unter Verwendung von lediglich dem Elektromotor zu dem vorhergesagten Ziel zu reisen, lediglich den Elektromotor unter Verwendung des Hybridsteuergeräts **(15)** zu aktivieren, oder um, sofern das Hybridfahrzeug nicht dazu in der Lage ist, unter Verwendung von lediglich dem Elektromotor zu dem vorhergesagten Ziel zu reisen, andererseits sowohl den Elektromotor **(12)** als auch die Brennkraftmaschine **(11)** unter Verwendung des Hybridsteuergeräts (15) so zu aktivieren, dass die Menge der in dem elektrischen Ladegerät verbleibenden Ladung einen vorbestimmten unteren Grenzwert erreicht, wenn das Hybridfahrzeug an dem vorhergesagten Ziel ankommt.

## Revendications

1. Procédé d'aide à la conduite pour un véhicule hybride dont les sources de puissance motrice sont un moteur à combustion interne (11) et un moteur électrique (12) fonctionnant avec de la puissance électrique fournie par un chargeur électrique et qui comprend un dispositif de commande hybride (15) pour commander le moteur à combustion interne et le moteur électrique ; comprenant le fait :
de prédire une destination sur la base d'un historique de déplacement antérieur, à condition que la destination ne soit pas établie, où, lorsque le véhicule a parcouru une distance prédéterminée depuis un point de départ, ou lorsqu'un temps prédéterminé s'est écoulé depuis que le véhicule a commencé à se déplacer du point de départ, ou lorsque le véhicule obtient un nombre d'identifications de liaisons supérieur ou égal à un nombre d'identifications de liaisons prédéterminé, un moyen de stockage de données d'historique (R) stockant des données d'historique du déplacement (RA) du véhicule hybride fait l'objet d'une recherche pour déterminer si des données d'historique du déplacement (RA) qui sont similaires à l'état du déplacement actuel existent ;
de calculer, lorsqu'un nombre de fois (R5) de parcours d'une destination ayant un nombre maximal de fois de parcours parmi les destinations prédites est supérieur ou égal à un nombre de fois prédéterminé, un degré de fiabilité de la destination prédite ayant le nombre maximal de fois de parcours sur la base des données d'historique de déplacement détectées (RA), où les nombres de parcours (R5) de toutes les donnes d'historique de déplacement détectées (RA) sont ajoutés et le nombre maximal de fois de parcours est divisé par le nombre total ajouté ; et
de commander le dispositif de commande hybride sur la base de la destination ayant le nombre maximal de fois de parcours lorsque le degré calculé de fiabilité est supérieur ou égal à une valeur prédéterminée.

2. Dispositif d'aide à la conduite pour un véhicule hybride dont les sources de puissance motrice sont un moteur à combustion interne (11) et un moteur électrique (12) fonctionnant avec de la puissance électrique fournie par un chargeur électrique et qui comprend un dispositif de commande hybride (15) pour commander le moteur à combustion interne et le moteur électrique ; comprenant :
un moyen de calcul de position de véhicule (3) pour calculer une position du véhicule hybride ;
un moyen de détermination d'établissement (5) pour déterminer si une destination est établie ;
un moyen de stockage de données d'historique (R) pour stocker des données d'historique de déplacement (RA) du véhicule hybride ;
un moyen de prédiction de destination (10) pour prédire une destination sur la base des données d'historique de déplacement, à condition que la destination ne soit pas établie, où le moyen de prédiction de destination (10) est adapté pour faire une recherche dans le moyen de stockage de données d'historique (R) afin de déterminer si les données d'historique de déplacement (RA) qui sont similaires à l'état du déplacement actuel existent, lorsque le véhicule a parcouru une distance prédéterminée depuis un point de départ, ou lorsqu'un temps prédéterminé s'est écoulé depuis que le véhicule a commencé à se déplacer du point de départ, ou lorsque le véhicule obtient un nombre d'identifications de liaisons supérieur ou égal à un nombre d'identifications de liaisons prédéterminé ;
un moyen de calcul de degré de fiabilité pour calculer, lorsqu'un nombre de fois (R5) de parcours d'une destination ayant un nombre maximal de fois de parcours parmi les destinations prédites est supérieur ou égal à un nombre de fois prédéterminé, un degré de fiabilité de la destination prédite ayant le nombre maximal de fois parcours sur la base des données d'historique de déplacement ; et
un moyen de commande pour commander le dispositif de commande hybride sur la base de la destination ayant le nombre maximal de fois de parcours lorsque le degré de fiabilité calculé est supérieur ou égal à une valeur prédéterminée.

3. Dispositif d'aide à la conduite pour un véhicule hybride selon la revendication 2, comprenant en plues :
un moyen d'obtention d'itinéraire pour obtenir un itinéraire vers la destination sur la base des données d'historique de déplacement, où :
le moyen de commande est adapté pour commander le dispositif de commande hybride sur la base de l'itinéraire vers la destination ayant le nombres maximal de fois de parcours.

4. Dispositif d'aide à la conduite pour un véhicule hybride selon la revendication 3, comprenant en plues :
un moyen de prédiction de distance à parcourir (6) pour calculer une distance à parcourir prédite jusqu'à la destination prédite, où :
le moyen de commande est adapté pour déterminer si le véhicule hybride est capable de se déplacer jusqu'à la destination prédite en utilisant le moteur électrique (12) uniquement sur la base de la distance à parcourir prédite et d'activer, à condition qu'il soit possible pour le véhicule hybride de se déplacer jusqu'à la destination prédite en utilisant le moteur électrique uniquement, le moteur électrique uniquement utilisant le dispositif de commande hybride (15), ou sinon d'activer, à condition que le véhicule hybride ne soit pas capable de se déplacer jusqu'à la destination prédite en utilisant le moteur électrique uniquement, le moteur électrique (12) et le moteur à combustion interne (11) utilisant tous deux le dispositif de commande hybride (15) de manière à ce que la quantité de charge restante dans le chargeur électrique devienne une limite inférieure prédéterminée lorsque le véhicule hybride arrive à la destination prédite.
